# EUROPEAN PATENT SPECIFICATION

(11) **EP 2 459 304 B1**
(45) Date of publication and mention of the grant of the patent: **26.11.2014**
(21) Application number: 10740093.9
(22) Date of filing: 27.07.2010
(51) Int. Cl.: B29B 7/72, B29B 7/74

(54) **VARIABLE FLOW CONTROL USING LINEAR PUMPS**
VARIABLE FLUSSSTEUERUNG MIT LINEAREN PUMPEN
COMMANDE DE DÉBIT VARIABLE À L AIDE DE POMPES LINÉAIRES

(30) Priority: 29.07.2009 US 229347 P
(43) Date of publication of application: 06.06.2012
(73) Proprietor: Graco Minnesota Inc., Minneapolis, MN 55413 (US)
(72) Inventor: CRYER, Michael A., Massillon, OH 44646 (US); SEBION, Michael J., Apple Valley, MN 55124 (US)
(74) Representative: Cloughley, Peter Andrew
(86) International application number: PCT/US2010/043449
(87) International publication number: WO 2011/014524

(56) References cited:
- EP-A2- 0 225 604
- US-A- 4 167 236
- US-A- 4 209 258
- US-A- 4 881 820

## Description

### BACKGROUND ART

One of the issues when dispensing two component materials in a high-end system, is the need to maintain constant pressure during idle periods between dispense operations. In past practice, especially in RIM based (Reaction Injection Molding) dispensers, an automatic recirculation system was used. An automatic recirculation system requires the dispense pumps and conditioning systems to operate continuously.

EP 0225604 discloses an apparatus for metering and feeding reactive chemical components to a high pressure mixing head. The apparatus comprises at least a first and second transfer cylinder whose control unit is fed with hydraulic fluid from a single source of constant pressure, and whose component pumping unit is connected to a tank for the component, respectively to an inlet aperture for the component in a chamber of the mixing head, by means of a proportional servo valve which is controlled in relation to the rate of flow of the components so as to keep both the pressure and the flow of the components to be mixed constant.

### DISCLOSURE OF THE INVENTION

According to an aspect of the invention, there is provided a variable flow plural component dispensing system as defined in claim 1.

This method of the instant invention will eliminate the need of an automatic recirculation system, its cost and power requirements while providing similar results. In a fixed ratio system according to the invention, the following advantages are present: (1) pressure control: the pressure set point is maintained in both static and dynamic condition which eliminates static to dynamic pressure dead band; (2) flow rate control: the flow rate of a two component material is maintained to set point to ensure an accurate volumetric dispense rate; (3) change-over control: reduces volume loss during directional change (change over) for the linear piston pump - this loss during change over can create a loss in dispense volume; (4) material viscosity control: two independent heat controls for both the A and B side components manages material viscosity for dispense repeatability and through mix in the applicator; (5) applicator controls: assure all parameters are met before a material dispense is initiated.

Similarly, in a variable ratio system, the following advantages are present: (1) pressure control: pressure set point is maintained in both static and dynamic conditions which eliminates static to dynamic pressure dead band; (2) flow rate control: the flow rate of a two component material is maintained to set point to ensure both an accurate volumetric mix ratio and dispense rate; (3) change over control: reduces volume loss during directional change (change over) for the linear piston pump - this loss during change over can create a loss in dispense volume; (4) material viscosity control: two independent heat controls for both the A and B side components manages material viscosity for dispense repeatability and through mix in the applicator; (5) applicator controls: assure all parameters are met before a material dispense is initiated; and (6) synchronized pump control: none phase shifted pump control.

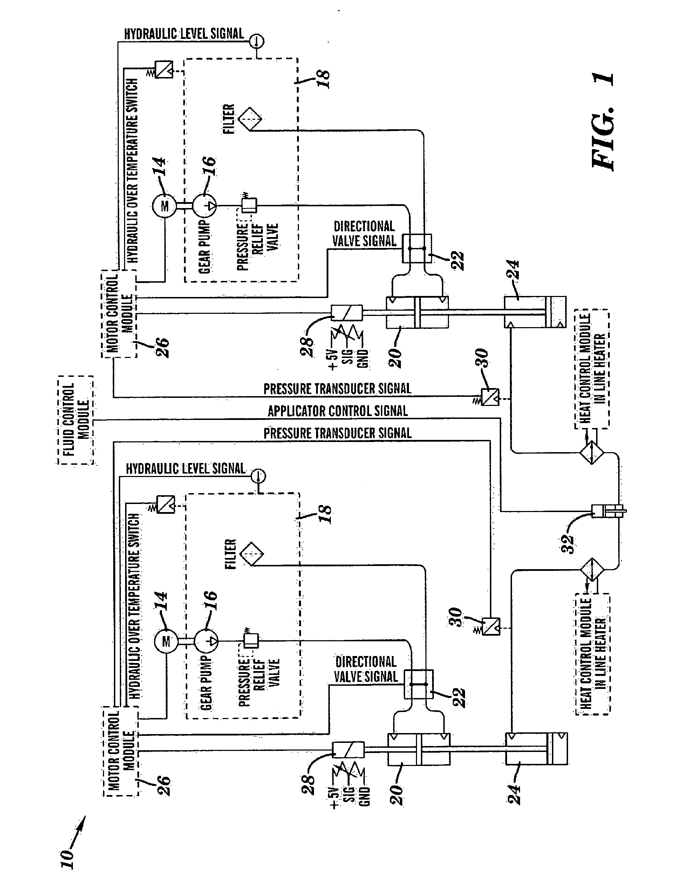

The following disclosure is based on the system block diagram of Figure 1. The diagram illustrates a full variable ratio system. The general design can be used for both variable and fixed ratio dispensing systems.

As indicated in the figure, each pump is powered by a DC motor spinning a gear pump which is immersed in a hydraulic power pack. The power pack output feeds a hydraulic linear motor where its direction is controlled by a two output reversing valve. The hydraulic linear motor drives one or two material pumps which are mechanically attached to the hydraulic pump.

The pressure and/or flow outputs of the material pumps are controlled by altering the torque output of the DC motor, using a custom designed motor control module (MCM). The MCM uses a linear position sensor and a pressure transducer installed at the output of the material pump as the primary process variables (or feedbacks) for controlling the pump. The system is not dependant upon expensive flow meters for controlling the pump output.

The two MCM's will be installed to control two pumps independently. In this configuration, the two MCM's will communicate with each other to provide a true variable ratio system for the user.

To eliminate the need for expensive automatic recirculation components, this system will stall to a set pressure entered by the user. Stalling to pressure is the process of operating the motor and pump(s) to a low torque level with the dispense valve(s) closed. When in this mode, the small levels of torque applied to the motor are only required to maintain the requested target pressure.

Implementing this practice will save considerable power, hence eliminating the need to operate the pumps continuously during the idle non-dispense periods, plus will eliminate the need to operate the material conditioning system. Stalling to a set pressure will help ensure the material dispensed from the material applicator is at the desired pressure at the start of the dispense operation.

The system will stall at pressure after a dispense operation to the target pressure set during the last dispense operation. This will remain during an idle situation between dispenses.

When a new dispense operation is instigated, a new target pressure for the dispense will entered into the pressure control logic (replacing the older target pressure), prior to the dispense start. If the idle stalled condition described previously remains for an extended period of time, the "stall to pressure" condition will be terminated. The finite limit for allowing the "stalled to pressure" condition to exist is to save power, reduce heat in the hydraulic power pack and other mechanical components.

The following advantages apply to the system configured without an automatic recirculation system:
- The invention eliminates the need of automatic recirculation valves, logic and associated recirculation tubing.
- The invention eliminates the need operating the conditioning system at dispense levels, hence saving significant power to operate the machine.
- Since the pumps will not significantly operate during idle periods, less wear on the mechanical components is expected.

In the variable ratio dispense configuration, the user can select to dispense 2 part material at a constant flow rate. The MCM will take the flow rate requested by the user (in units of volume over time increments for the mixed 2 part material), and use the following items to mathematically convert the information into target piston velocities for each pump in the system:
1. Size of the A and B pumps.
2. Ratio for the material entered by the user.

Controlling the flow rate of the material dispensed is done by controlling the pump pressure and pump velocity. Velocity is calculated by the MCM logic, by calculating the change in pump position at a fixed interval of time.

The existing MCM logic will control flow by maintaining piston velocity between pump reversals with either a single velocity PID logic loop, or 2 cascaded PID loops with the top velocity control loop having its control output feeding a lower pressure control loop with pressure set points. If operating at low dispense pressures, a pump velocity only control loop may be used.

To minimize system cost, the flow control logic does not need the input of an expensive flow meter for monitoring the flow output of the pump. For the system, a separate optional flow monitoring module may be used for verifying the flow output of the pump. The separate optional system uses flow meters installed in the material flow path to verify flow output of the system.

The MCM will be responsible for monitoring and tracking whether the target velocity of the pump has been achieved, after each velocity calculation of the pump. If the logic was NOT able to maintain its target velocity (within a certain percentage of the target) for the large percentage of the dispense operation, a corresponding off ratio or off flow error code will be generated.

When dispensing at a constant flow on a variable ratio system, the following items apply:
a. When dispensing 2 components which need to have the ratio of the final mixed material at the same ratio for the entire duration of the dispense operation, both pumps will operate in a synchronized mode. In other words, both pumps must reverse at the same time to duplicate the pressure drop in both pumps simultaneously to better ensure that an "on ratio condition" does NOT exist during the pump reversing process. This process may not be necessary for some 2 component materials.
b. To control the ratio of the 2 pumps, both pumps must maintain their respective pump velocities a high percentage of time during the dispense operation. For example, to dispense at a 2:1 ratio for 2 pumps of the same size, the pump velocity of one pump needs to be 2 times faster than the 2nd pump. For this type of dispense, the slower synchronized pump will be "short stroked" (will not travel the entire pump length) as set forth above.

The following advantages apply to the system of variable ratio control:
1. The invention allows the use of linear pumps, which are cheaper and will dispense a larger variety of materials. Using rational gear pumps for variable ratio dispensing applications is more expensive, and does not work very well when dispensing high viscosity or abrasive materials.
2. The invention does not require expensive flow meters for controlling flow for the user.
3. The invention allows the user to alter the flow rate and dispense ratio without changing any mechanical settings.
4. The invention allows the user to alter the flow rate and dispense ratio during an active dispense operation.

These and other objects and advantages of the invention will appear more fully from the following description made in conjunction with the accompanying drawings wherein like reference characters refer to the same or similar parts throughout the several views.

### BRIEF DESCRIPTION OF DRAWINGS

Figure 1 shows a variable ratio system according to the instant invention.

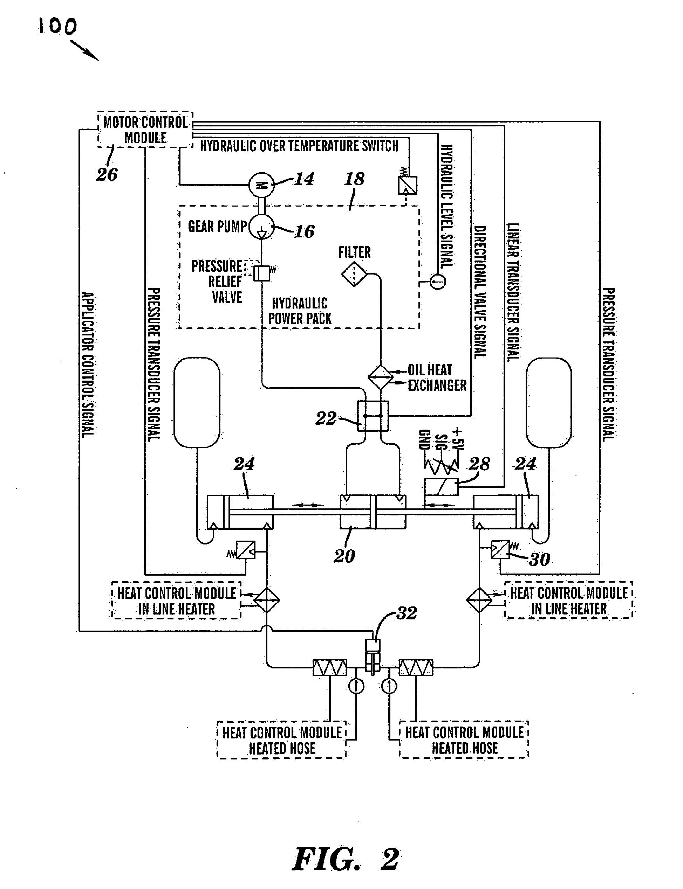

Figure 2 shows a fixed ratio system according to the instant invention.

### BEST MODE FOR CARRYING OUT THE INVENTION

The following disclosure is based on the system block diagram of Figure 1. The diagram illustrates a full variable ratio system 10. The general design can be used for both variable 10 and fixed ratio 100 dispensing systems.

As indicated in the figure, each pump is powered by a DC motor 14 spinning a gear pump 16 which is immersed in a hydraulic power pack 18. The power pack 18 output feeds a hydraulic linear motor 20 where its direction is controlled by a two output reversing valve 22. The hydraulic linear motor 20 drives one or two material pumps 24 which are mechanically attached to the hydraulic pump.

The pressure and/or flow outputs of the material pumps 24 are controlled by altering the torque output of the DC motor 14, using a custom designed motor control module (MCM) 26 . The MCM 26 uses a linear position sensor 28 and a pressure transducer 30 installed at the output of the material pump 24 as the primary process variables (or feedbacks) for controlling the pump 24. The system is not dependant upon expensive flow meters for controlling the pump output.

The two MCM's 26 will be installed to control two pumps 24 independently. In this configuration, the two MCM's 26 will communicate with each other to provide a true variable ratio system for the user.

To eliminate the need for expensive automatic recirculation components, this system will stall to a set pressure entered by the user. Stalling to pressure is the process of operating the motor 14 and pump(s) 24 to a low torque level with the dispense valve(s) 32 closed. When in this mode, the small levels of torque applied to the motor 14 are only required to maintain the requested target pressure.

Implementing this practice will save considerable power, hence eliminating the need to operate the pumps 24 continuously during the idle non-dispense periods, plus will eliminate the need to operate the material conditioning system. Stalling to a set pressure will help ensure the material dispensed from the material applicator 32 is at the desired pressure at the start of the dispense operation.

The system will stall at pressure after a dispense operation to the target pressure set during the last dispense operation. This will remain during an idle situation between dispenses.

When a new dispense operation is instigated, a new target pressure for the dispense will entered into the pressure control logic (replacing the older target pressure), prior to the dispense start. If the idle stalled condition described previously remains for an extended period of time, the "stall to pressure" condition will be terminated. The finite limit for allowing the "stalled to pressure" condition to exist is to save power, reduce heat in the hydraulic power pack and other mechanical components.

In the variable ratio dispense configuration, the user can select to dispense 2 part material at a constant flow rate. The MCM will take the flow rate requested by the user (in units of volume over time increments for the mixed 2 part material), and use the following items to mathematically convert the information into target piston velocities for each pump in the system:
1. Size of the A and B pumps.
2. Ratio for the material entered by the user.

Controlling the flow rate of the material dispensed is done by controlling the pump pressure and pump velocity. Velocity is calculated by the MCM logic, by calculating the change in pump position at a fixed interval of time.

The existing MCM logic will control flow by maintaining piston velocity between pump reversals with either a single velocity PID logic loop, or 2 cascaded PID loops with the top velocity control loop having its control output feeding a lower pressure control loop with pressure set points. If operating at low dispense pressures, a pump velocity only control loop may be used.

To minimize system cost, the flow control logic does not need the input of an expensive flow meter for monitoring the flow output of the pump. For the system, a separate optional flow monitoring module may be used for verifying the flow output of the pump. The separate optional system uses flow meters installed in the material flow path to verify flow output of the system.

The MCM will be responsible for monitoring and tracking whether the target velocity of the pump has been achieved, after each velocity calculation of the pump. If the logic was NOT able to maintain its target velocity (within a certain percentage of the target) for the large percentage of the dispense operation, a corresponding off ratio or off flow error code will be generated.

When dispensing at a constant flow on a variable ratio system, the following items apply:
a. When dispensing 2 components which need to have the ratio of the final mixed material at the same ratio for the entire duration of the dispense operation, both pumps will operate in a synchronized mode. In other words, both pumps must reverse at the same time to duplicate the pressure drop in both pumps simultaneously to better ensure that an "on ratio condition" does not exist during the pump reversing process. This process may not be necessary for some 2 component materials.
b. To control the ratio of the 2 pumps, both pumps must maintain their respective pump velocities a high percentage of time during the dispense operation. For example, to dispense at a 2:1 ratio for 2 pumps of the same size, the pump velocity of one pump needs to be 2 times faster than the 2nd pump. For this type of dispense, the slower synchronized pump will be "short stroked" (will not travel the entire pump length) as set forth above.

## Claims

1. A variable flow plural component dispensing system (10), said dispensing system (10) comprising:
first and second hydraulic pumps;
a DC motor (14) adapted to power each said hydraulic pump;
a two output reversing valve (22) connected to each said hydraulic pump;
at least one hydraulic linear motor (20), the direction of which is controlled by a corresponding one of said reversing valves (22);
a first motor control module (26); and
at least one material pump (24), said material pump (24) being mechanically attached to said hydraulic linear motor (20);
wherein said first motor control module (26) is adapted to control one of the pressure and the flow output by said material pump (24) by altering the torque output of a corresponding one of said DC motors (14).

2. The variable flow plural component dispensing system (10) of claim 1, further comprising a linear position sensor (28) and a pressure transducer (30) installed at the output of said material pump (24).

3. The variable flow plural component dispensing system (10) of claim 1 or claim 2, further comprising a second motor control module (26), wherein said at least one material pump (24) comprises first and second material pumps (24), and said first and second motor control modules (26) are adapted to control said first and second material pumps (24) independently.

4. The variable flow plural component dispensing system (10) of claim 3, wherein said first and second motor control modules (26) are adapted to communicate with each other to provide a true variable ratio system.

5. The variable flow plural component dispensing system (10) of any of claims 1 to 4, wherein said first motor control module (26) is adapted to stall the dispensing system (10) to a requested target pressure entered by a user.

6. The variable flow plural component dispensing system (10) of claim 5, wherein said motor (14) is adapted to apply small levels of torque while the dispensing system (10) is stalled to maintain the requested target pressure.

## Patentansprüche

1. Durchflussmengenvariables Mehrkomponenten-Ausgabesystem (10), wobei das Ausgabesystem (10) Folgendes umfasst:
eine erste und eine zweite Hydraulikpumpe;
einen Gleichstrommotor (14), der dafür ausgelegt ist, jede der Hydraulikpumpen anzutreiben;
ein Umkehrventil mit zwei Ausgängen (22), das mit jeder der Hydraulikpumpen verbunden ist;
mindestens einen Hydraulik-Linearmotor (20), dessen Richtung durch ein entsprechendes der Umkehrventile (22) gesteuert wird;
ein erstes Motorsteuerungsmodul (26); und
mindestens eine Materialpumpe (24), wobei die Materialpumpe (24) mechanisch an den Hydraulik-Linearmotor (20) angeschlossen ist;
wobei das erste Motorsteuerungsmodul (26) dafür ausgelegt ist, den Druck oder die Strömungsabgabemenge durch die Materialpumpe (24) zu steuern, indem das Ausgangsdrehmoment eines entsprechenden der Gleichstrommotoren (14) verändert wird.

2. Durchflussmengenvariables Mehrkomponenten-Ausgabesystem (10) nach Anspruch 1, das des Weiteren einen Linearpositionssensor (28) und einen Druckmesswandler (30) umfasst, die am Ausgang der Materialpumpe (24) installiert sind.

3. Durchflussmengenvariables Mehrkomponenten-Ausgabesystem (10) nach Anspruch 1 oder Anspruch 2, das des Weiteren ein zweites Motorsteuerungsmodul (26) umfasst, wobei die mindestens eine Materialpumpe (24) eine erste und eine zweite Materialpumpe (24) umfasst, und das erste und das zweite Motorsteuerungsmodul (26) dafür ausgelegt sind, die erste und die zweite Materialpumpe (24) unabhängig zu steuern.

4. Durchflussmengenvariables Mehrkomponenten-Ausgabesystem (10) nach Anspruch 3, wobei das erste und das zweite Motorsteuerungsmodul (26) dafür ausgelegt sind, miteinander zu kommunizieren, um ein System mit einem echten variablen Verhältnis bereitzustellen.

5. Durchflussmengenvariables Mehrkomponenten-Ausgabesystem (10) nach einem der Ansprüche 1 bis 4, wobei das erste Motorsteuerungsmodul (26) dafür ausgelegt ist, das Ausgabesystem (10) auf einen angeforderten Solldruck zu drosseln, der durch einen Benutzer eingegeben wurde.

6. Durchflussmengenvariables Mehrkomponenten-Ausgabesystem (10) nach Anspruch 5, wobei der Motor (14) dafür ausgelegt ist, kleine Drehmomentwerte anzulegen, während das Ausgabesystem (10) gedrosselt wird, um den angeforderten Solldruck aufrecht zu erhalten.

## Revendications

1. Système de distribution de composants multiples à débit variable (10), le dit système de distribution (10) comprenant :
une première et une seconde pompe hydraulique ;
un moteur CC (14) adapté pour mettre sous tension chaque dite pompe hydraulique ;
une soupape d'inversion à deux sorties (22) connectée à chaque dite pompe hydraulique ;
au moins un moteur linéaire hydraulique (20), dont la direction est commandée par une soupape correspondante desdites soupapes d'inversion (22) ;
un premier module de commande de moteur (26) ; et
au moins une pompe de matière (24), ladite pompe de matières (24) étant fixée mécaniquement audit moteur linéaire hydraulique (20) ;
dans lequel ledit premier module de commande moteur (26) est adapté pour commander une de la pression et la sortie d'écoulement par ladite pompe de matière (24) en modifiant le couple de sortie d'un moteur correspondant desdits moteurs CC (14).

2. Système de distribution de composants multiples à débit variable (10) selon la revendication 1, comprenant en outre un capteur de position linéaire (28) et un transducteur de pression (30) installé à la sortie de ladite pompe de matière (24).

3. Système de distribution de composants multiples à débit variable (10) selon la revendication 1 ou 2, comprenant en outre un second module de commande de moteur (26), dans lequel ladite au moins une pompe de matière (24) comprend une première et une seconde pompe de matière (24), et lesdits premier et second module de commande de moteur (26) sont adaptées pour commander lesdites première et seconde pompe de matière (24) indépendamment.

4. Système de distribution de composants multiples à débit variable (10) selon la revendication 3, dans lequel lesdits premier et second module de commande de moteur (26) sont adaptés pour communiquer l'un avec l'autre afin de fournir un système à rapport variable réel.

5. Système de distribution de composants multiples à débit variable (10) selon une quelconque des revendications 1 à 4, dans lequel le dit premier module de commande de moteur (26) est adapté pour faire caler le système de distribution (10) à une pression cible demandée entrée par un utilisateur.

6. Système de distribution de composants multiples à débit variable (10) selon la revendication 5, dans lequel ledit moteur (14) est adapté pour appliquer des petits niveaux de couple alors que le système de distribution (10) est calé pour conserver la pression cible demandée.
